(19) Europäisches Patentamt / European Patent Office / Office européen des brevets

(11) **EP 4 528 866 A1**

(12) **EUROPEAN PATENT APPLICATION**

(43) Date of publication:
**26.03.2025 Bulletin 2025/13**

(21) Application number: **24201741.6**

(22) Date of filing: **20.09.2024**

(51) International Patent Classification (IPC):
*H01M 10/04* (2006.01)   *H01M 10/0587* (2010.01)
*H01M 50/105* (2021.01)

(52) Cooperative Patent Classification (CPC):
**H01M 50/105; H01M 10/0431; H01M 10/0468;
H01M 10/0587;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.09.2023  CN 202311225745**

(71) Applicant: **Ningde Amperex Technology Limited
Ningde City, Fujian Province 352100 (CN)**

(72) Inventor: **SHEN, Haijie
Ningde City, Fujian 352100 (CN)**

(74) Representative: **Icosa
83 avenue Denfert-Rochereau
75014 Paris (FR)**

(54) **SECONDARY BATTERY AND ELECTRONIC DEVICE**

(57)    A secondary battery (100) includes a packaging bag (10a) and a jelly roll (20) accommodated in the packaging bag (10a). Along a first direction (X), a length of the jelly roll (20) is L mm; along a second direction (Y), a width of the jelly roll (20) is $W_1$ mm; and $2 \leq L/W_1 \leq 6$. The secondary battery (100) further includes at least one adhesive member (30). The at least one adhesive member (30) is provided on an outer surface of the jelly roll (20) in a sleeving manner along a winding direction (M) of the jelly roll (20), and the at least one adhesive member (30) is adhered between the jelly roll (20) and the packaging bag (10a). The first direction (X) is a winding axis direction of the jelly roll (20), the second direction (Y) is a width direction of the jelly roll (20), and the first direction (X) is perpendicular to the second direction (Y).

FIG. 2

Processed by Luminess, 75001 PARIS (FR)

EP 4 528 866 A1

**Description**

**TECHNICAL FIELD**

Embodiments of this application relate to the field of electrochemical technologies, and in particular, to a secondary battery and an electronic device.

**BACKGROUND**

With people's demand for electronic products, secondary batteries are also required to be suitable for different spaces of various electronic products. For example, for a slender electronic product such as smart glasses or headphones, a narrow and long secondary battery is required for application.

A pouch secondary battery is gradually used in the above-mentioned slender electronic product due to advantages of light weight and high energy density. The pouch secondary battery usually includes a packaging bag and a jelly roll accommodated in the packaging bag. In a high-temperature environment or during long-term charge and discharge cycles, the jelly roll expands. For the narrow and long secondary battery, the expansion of the jelly roll is prone to cause the packaging bag to bulge, and even break sealing of the packaging bag, causing breakage and liquid leakage of the secondary battery.

**SUMMARY**

Embodiments of this application aim to provide a secondary battery and an electronic device to reduce expansion of the secondary battery and reduce a risk of liquid leakage of the secondary battery.

In order to resolve technical problems, the following technical solutions are used in embodiments of this application.

According to a first aspect, this application provides a secondary battery, including a packaging bag and a jelly roll accommodated in the packaging bag, where along a first direction, a length of the jelly roll is L mm; along a second direction, a width of the jelly roll is $W_1$ mm; and $2 \leq L / W_1 \leq 6$. The secondary battery further comprises a adhesive member. The adhesive member is provided on an outer surface of the jelly roll in a sleeving manner along a winding direction of the jelly roll, and the adhesive member is adhered between the jelly roll and the packaging bag. The first direction is a winding axis direction of the jelly roll, the second direction is a width direction of the jelly roll, and the first direction is perpendicular to the second direction.

In the above technical solution, the adhesive member encircles the jelly roll and is provided on the outer surface of the jelly roll in a sleeving manner, so as to tighten electrode plates and separators at layers of the jelly roll, so that adhesion of the layers of the jelly roll is stable and gas generated by the jelly roll can be reduced, which can effectively alleviate expansion of the jelly roll, and reduce breakage of the packaging bag. In addition, the adhesive members can disperse stress of the jelly roll, reduce a local stress impact, and thus alleviate the expansion of the jelly roll, and reduce the breakage of the packaging bag. Moreover, the jelly roll and the packaging bag are adhered by using the adhesive member, which can reduce movement of the jelly roll in the packaging bag, thereby reducing impact of the jelly roll on the packaging bag, further reducing the breakage of the packaging bag, and improving high temperature resistance performance of the secondary battery.

In some implementations, $50 < L \leq 200$, and $20 \leq W_1 \leq 100$. Furthermore, $50 < L \leq 150$, and $25 \leq W_1 \leq 100$. A jelly roll structure with the adhesive member in the embodiments is particularly suitable for a narrow and long secondary battery.

In some implementations, there are a plurality of the adhesive members, the plurality of the adhesive members are all provided on the outer surface of the jelly roll in a sleeving manner, and the plurality of the adhesive members are provided at intervals along the first direction. Arrangement of the plurality of the adhesive members can disperse the stress on the jelly roll, reduce the local stress impact, alleviate the expansion of the jelly roll, and reduce the breakage of the packaging bag.

In some implementations, the jelly roll has a first outer surface provided along the winding direction; and along the first direction, the plurality of the adhesive members are provided at two ends of the first outer surface in a sleeving manner. The two ends of the first outer surface are at edge locations of the jelly roll, and bonding strength that is between the electrode plates and the separators near the two ends is weak. The plurality of the adhesive members are provided at the two ends of the first outer surface in a sleeving manner, which can further improve the bonding strength of the jelly roll and effectively disperse the stress.

In some implementations, a quantity of the adhesive member is N, $N \geq \lceil X \rceil$, and $X = (L / W_1) + 1$. The quantity

of the adhesive member is limited based on a length-to-width ratio of the jelly roll, and $N \geq \lceil X \rceil$, to ensure effective stress dispersion. The first outer surface of the jelly roll also has a plurality of uncovered regions, a quantity of the uncovered regions is M, and M = N - 1. Covered regions wound with the plurality of the adhesive members and the uncovered regions unwound with the plurality of the adhesive members form a reinforcing structure similar to a reinforcing rib, which can further improve the bonding strength of the jelly roll and effectively disperse the stress.

In some implementations, the jelly roll has a first outer surface provided along the winding direction, and an area of the first outer surface is $S_1$ mm$^2$. A coverage area of a single of the adhesive member on the first outer surface is $S_2$ mm$^2$, and $10\% \leq S_2/S_1 \leq 20\%$. The single of the adhesive member has a sufficient adhesive area on the first outer surface, which can reduce stress concentration, and reduce tightening damage to the jelly roll, and the adhesive member can be stably sleeved and adhered. A coverage area of all of the plurality of the adhesive members on the first outer surface is $S_3$ mm$^2$, and $40\% \leq S_3 / S_1 \leq 80\%$, which can reduce tightening damage of the plurality of the adhesive members to the jelly roll. In addition, the plurality of the adhesive members also adhere to the packaging bag. In the above adhesion area, when the jelly roll and the packaging bag have a relative movement tendency or have relative movement, tearing of the plurality of the adhesive members can be reduced, to enhance bonding strength between the jelly roll and the packaging bag.

In some implementations, along the first direction, a width of the adhesive member is $W_2$ mm, and $2 \leq W_2 \leq 20$. The sufficient width ensures a sufficient adhesion area, to reduce stress concentration on the jelly roll and reduce tightening damage of the adhesive member to the jelly roll. Along a third direction, a thickness of the adhesive member is $T_1$ μm, and $5 \leq T_1 \leq 80$, to ensure bonding strength of the adhesive member, reduce a space occupied by the adhesive member, and ensure energy density of the secondary battery. The third direction is perpendicular to the winding direction, and the third direction is perpendicular to the first direction.

In some implementations, the adhesive member comprises hot melt adhesive or pressure-sensitive adhesive. Hot melting and solification of the hot melt adhesive can be achieved during a formation stage of the secondary battery. Liquid hot melt adhesive is viscous and can firmly adhere the jelly roll to the packaging bag. When the formation stage is finished, the hot melt adhesive quickly cools and solidifies, which can ensure bonding strength between the jelly roll and the packaging bag. A characteristic of the pressure-sensitive adhesive is that the pressure-sensitive adhesive can perform adhesion when slight pressure is applied without a need for additional heating, solvent, or water. The adhesion of the jelly roll to the packaging bag can be implemented by slightly pressing an outer surface of the packaging bag along a direction towards the jelly roll. Such an operation is simple and convenient, and can ensure the bonding strength between the jelly roll and the packaging bag.

Optionally, the adhesive member comprises a substrate layer, two opposite surfaces of the substrate layer along a thickness direction of the substrate layer are respectively provided with a first adhesive layer and a second adhesive layer, the first adhesive layer is adhered to the jelly roll, the second adhesive layer is adhered to the packaging bag, the first adhesive layer comprises the pressure-sensitive adhesive, and the second adhesive layer comprises the hot melt adhesive or the pressure-sensitive adhesive.

According to a second aspect, this application further provides an electronic device, including the secondary battery in any implementation of the first aspect.

The foregoing description is merely an overview of the technical solutions of this application. The following describes specific embodiments of this application illustratively to enable a clearer understanding of the technical solutions of this application, enable implementation of the technical solutions based on the content of the specification, and make the foregoing and other objectives, features, and advantages of this application more evident and comprehensible.

## BRIEF DESCRIPTION OF DRAWINGS

One or more embodiments are illustrated through corresponding accompanying drawings. These example illustrations do not constitute limitations to embodiments. Elements with same reference numerals in the accompanying drawings represent similar elements, unless otherwise specified. Figures in the accompanying drawings do not constitute limitations on scale.

FIG. 1 is a schematic structural diagram of a secondary battery according to some embodiments of this application;
FIG. 2 is an explosion schematic diagram of the secondary battery according to some embodiments of this application;
FIG. 3 is a schematic structural diagram of a secondary battery according to some embodiments of this application;
FIG. 4 is a schematic diagram of a winding structure of a jelly roll according to some embodiments of this application;
FIG. 5 is a schematic diagram of installation of a jelly roll and adhesive members according to some embodiments of this application;
FIG. 6 is a schematic structural diagram of an adhesive member according to some embodiments of this application;
FIG. 7 is a schematic structural diagram of a jelly roll according to some embodiments of this application; and
FIG. 8 is a top view of a secondary battery according to some embodiments of this application.

List of reference numerals:

100. Secondary battery;

10. Packaging bag; 10a. First bag body; 10b. Second bag body; 11. Accommodation cavity; 12. Pouch cavity; 13. Top sealing; 14. Side sealing;

20. Jelly roll; 20a. First end portion; 20b. Second end portion; 21. First electrode plate; 22. Second electrode plate; 23. Separator; 24. First outer surface; 241. Uncovered region;

30. Adhesive member; 31. Substrate layer; 32. First adhesive layer; 33. Second adhesive layer;

40. Tab; 41. First tab; 42. Second tab;

X. First direction; Y Second direction; Z. Third direction; M. Winding direction.

## DETAILED DESCRIPTION

Embodiments of the technical solution of this application are described in detail below with reference to the accompanying drawings. The following embodiments are only used to more clearly illustrate the technical solution of this application, and therefore, are merely examples and cannot be used to limit the protection scope of this application.

It is hereby noted that when an element is referred to as being "fixed to" or "disposed on" another element, the element can be directly on the another element, or there may be one or more intervening elements present therebetween. When an element is referred to as being "connected to" another element, the element can be directly connected to the another element, or there may be one or more intervening elements present therebetween.

In the description of the embodiments of this application, the technical terms "first", "second", and the like are merely used to distinguish between different objects, and shall not be construed as any indication or implication of relative importance or any implicit indication of the quantity, particular sequence or primary-secondary relationship of the technical features indicated. In the description of the embodiments of this application, "a plurality of" means two or more unless otherwise expressly and specifically defined.

In the description of the embodiments of this application, the term "and/or" describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Reference to "embodiments" in this specification means that particular features, structures, or characteristics described with reference to the embodiments may be included in at least one embodiment of this application. Occurrence of the phrase in various places in this specification does not necessarily refer to the same embodiment, nor is an independent or alternative embodiment that is mutually exclusive with other embodiments. In addition, the technical features involved in different embodiments of this application described below can be combined with each other as long as the technical features do not conflict with each other.

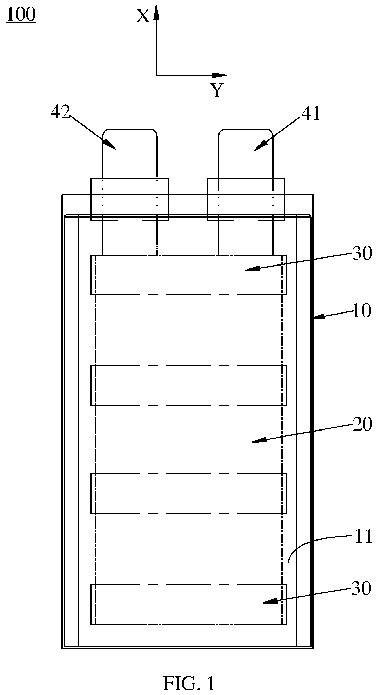

According to a first aspect, an embodiment of this application proposes a secondary battery 100. Referring to FIG. 1, the secondary battery 100 includes a packaging bag 10, a jelly roll 20, and a adhesive member 30. The jelly roll 20 is accommodated in the packaging bag 10, the adhesive member 30 is provided on an outer surface of the jelly roll 20 in a sleeving manner, and the adhesive member 30 is adhered between the jelly roll 20 and the packaging bag 10.

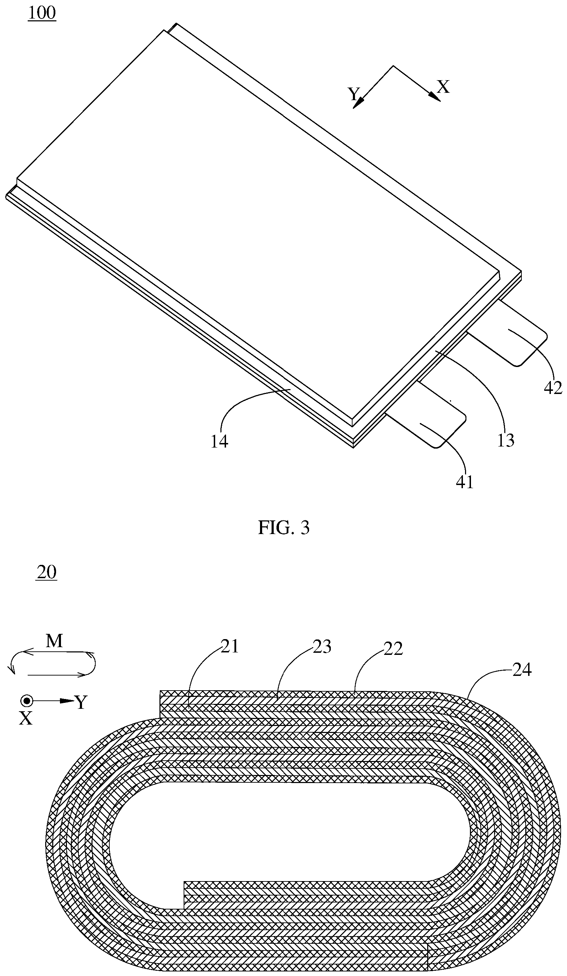

For the above packaging bag 10, referring to FIG. 1 to FIG. 3, an accommodation cavity 11 is enclosed by the packaging bag 10, and the accommodation cavity 11 can accommodate the above jelly roll 20 and an electrolyte (not marked in the figure). The packaging bag 10 may be a multi-layer composite film packaging bag 10 including a metal layer. The packaging bag 10 may be an aluminum-plastic film packaging bag including a PP (polypropylene) layer and an aluminum layer. For example, the packaging bag 10 includes a first bag body 10a and a second bag body 10b. The first bag body 10a and/or the second bag body 10b are/is punched with a pouch cavity 12. The jelly roll 20 may be disposed in the pouch cavity 12, and then edges of the first bag body 10a and the second bag body 10b are hot-pressed and sealed, so that a PP layer of the first bag body 10a and a PP layer of the second bag body 10b are adhered, and therefore, the complete packaging bag 10 is formed, the accommodation cavity 11 is formed in the pouch cavity 12, and the hot-pressed and sealed parts form a top seal edge 13 and a side seal edge 14 of the packaging bag 10.

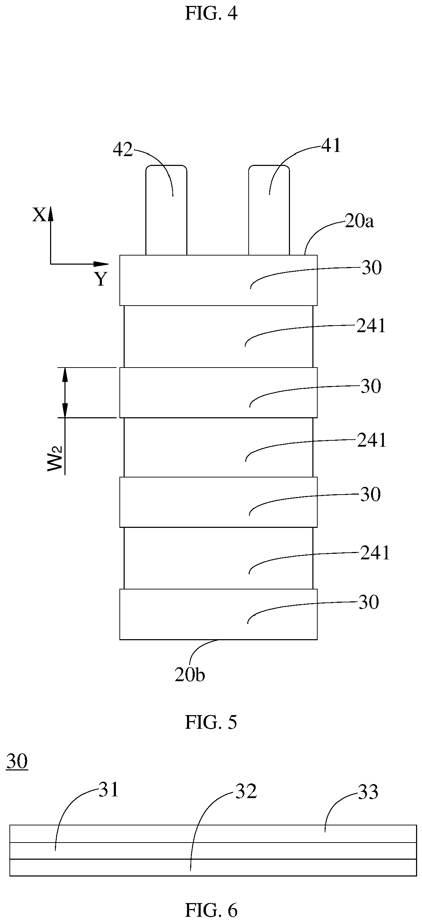

For the above jelly roll 20, referring to FIG. 1 and FIG. 4, the jelly roll 20 is accommodated in the accommodation cavity 11 of the packaging bag 10. The jelly roll 20 includes a first electrode plate 21, a second electrode plate 22, and a separator 23. The first electrode plate 21, the second electrode plate 22, and the separator 23 are stacked and wound to form the jelly roll 20. The separator 23 is disposed between the first electrode plate 21 and the second electrode plate 22, to separate the two electrode plates. The first electrode plate 21 and the second electrode plate 22 have opposite polarities, one of which is a cathode electrode plate and the other is an anode electrode plate. The separator 23 can be adhered between the first electrode plate 21 and the second electrode plate 22, which can reduce shrinkage of the separator 23, thereby reducing a risk of a short circuit caused by contact between the first electrode plate 21 and the second electrode plate 22; and improving overall bonding strength of the jelly roll 20, to alleviate expansion of the jelly roll 20.

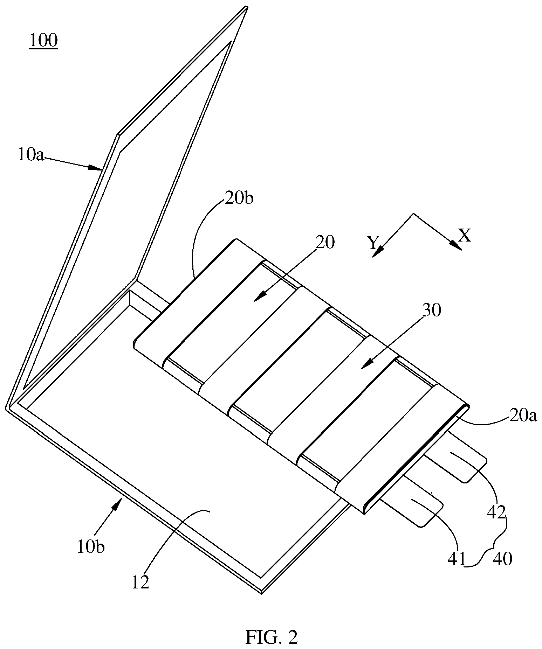

Referring to FIG. 2, FIG. 3, and FIG. 4, the jelly roll 20 is electrically connected to a tab 40. The tab 40 includes a first tab 41 and a second tab 42. The first tab 41 is electrically connected to the first electrode plate 21. The second tab 42 is electrically connected to the second electrode plate 22. For example, further referring to FIG. 5, along a first direction X, the jelly roll 20 includes a first end portion 20a and a second end portion 20b that are disposed opposite to each other, and the first tab 41 and the second tab 42 both protrude from the first end portion 20a of the jelly roll 20. After the jelly roll 20 is accommodated in the packaging bag 10, the first end portion 20a is close to the top seal edge 13 of the packaging bag 10, and both the first tab 41 and the second tab 42 can extend from the top seal edge 13. The tab 40 is connected to the cathode and anode electrode plates of the jelly roll 20, so as to transfer positive and negative charges of the jelly roll 20 to an external circuit, so that the secondary battery 100 can charge and discharge. The first direction X is a winding axis direction of the jelly roll 20, which may also be considered as a width direction of the first electrode plate 21 and/or a width direction of the second electrode plate 22, or a length direction of the jelly roll 20.

For the above adhesive members 30, referring to FIG. 1 and FIG. 4, along a winding direction M of the jelly roll 20, the adhesive member 30 encircles the jelly roll 20 and are provided on the outer surface of the jelly roll 20 in a sleeving manner, so as to tighten the electrode plates and the separators 23 at layers of the jelly roll 20, so that adhesion of the layers of the jelly roll 20 is stable and gas generated by the jelly roll 20 can be reduced, which can effectively alleviate expansion of the jelly roll 20, and reduce breakage of the packaging bag 10. Optionally, the adhesive member 30 is adhered to the outer surface of the jelly roll 20, which can further improve bonding strength between the electrode plates and the separator 23 at the layers. Preferably, the adhesive member 30 is adhered between the jelly roll 20 and the packaging bag 10, which can reduce movement of the jelly roll 20 in the packaging bag 10, and reduce impact of the jelly roll 20 on the packaging bag 10.

In some embodiments, the adhesive member 30 includes hot melt adhesive or pressure-sensitive adhesive. The hot melt adhesive needs to be heated during use. Hot melting and solification of the hot melt adhesive can be achieved during a formation stage of the secondary battery 100. Liquid hot melt adhesive is viscous and can firmly adhere the jelly roll 20 to the packaging bag 10. After the formation stage finished, the hot melt adhesive quickly cools and solidifies, which can ensure bonding strength between the jelly roll 20 and the packaging bag 10. A characteristic of the pressure-sensitive adhesive is that the pressure-sensitive adhesive can perform adhesion when slight pressure is applied without a need for additional heating, solvent, or water. For example, after the jelly roll 20 is accommodated in the packaging bag 10, the adhesion of the jelly roll 20 to the packaging bag 10 can be implemented by slightly pressing an outer surface of the packaging bag 10 towards the jelly roll 20. Such an operation is simple and convenient, and can ensure the bonding strength between the jelly roll 20 and the packaging bag 10.

In some other embodiments, referring to FIG. 6, the adhesive member 30 includes a substrate layer 31, and two opposite surfaces of the substrate layer 31 along a thickness direction of the substrate layer are respectively provided with a first adhesive layer 32 and a second adhesive layer 33.

The substrate layer 31 is used as a supporting structure of the first adhesive layer 32 and the second adhesive layer 33, and has high strength. The substrate layer 31 can be prepared by using a material such as polyethylene, polypropylene, polyester, polyvinyl chloride, or polyimide. The first adhesive layer 32 is adhered to the jelly roll 20, and the first adhesive layer 32 includes the pressure-sensitive adhesive. When preparation of the jelly roll 20 is completed, the adhesive member 30 is arranged on the outer surface of the jelly roll 20 in a sleeving manner, and the first adhesive layer 32 faces the jelly roll 20. The first adhesive layer 32 can be adhered to the jelly roll 20 by applying pressure towards the jelly roll 20 on the adhesive member 30. The second adhesive layer 33 is adhered to the packaging bag 10, and the second adhesive layer 33 includes the hot-melt adhesive or the pressure-sensitive adhesive. When the hot-melt adhesive is adopted, the hot-melt adhesive can be adhered to the packaging bag 10 by heat generated in the formation stage of the secondary battery 100. When the pressure-sensitive adhesive is adopted, the jelly roll 20 can be first placed in the packaging bag 10, and adhesion between the pressure-sensitive adhesive and the packaging bag 10 can be implemented by slightly pressing the packaging bag 10 externally.

Optionally, the adhesive member 30 includes an adhesive resin, a tackifying resin, and a curing agent.

The adhesive resin is a type of chemical substances commonly used in preparation of an adhesive agent, has adhesion and agglutination, and can be used to bond various materials. The adhesive resin includes one or more of a polyethylene-chlorotrifluoroethylene resin, a polypropylene resin, a modified polypropylene resin, an acrylic modified polyolefin resin, a polyethylene chlorotrifluoroethylene resin, an ethylene-vinyl acetate copolymer, an ethylene propylene copolymer, ethylene propylene diene monomer, ethylene propylene rubber, an ethylene propylene styrene acrylonitrile copolymer, an ethylene propylene terpolymer, isobutylene isoprene rubber, isoprene rubber, a maleic anhydride modified polyolefin resin, a modified polyphenylene ether resin, a modified polystyrene resin, a styrene-methylmethacrylate resin, acrylonitrile-butadiene rubber, polybutadiene rubber, a polybutadiene acrylonitrile resin, polypropylene butadiene rubber, a polybutadiene styrene resin, a styrene vinylbutadiene styrene copolymer, a styrene isoprene styrene block copolymer, a styrene butadiene styrene block copolymer, styrene-butadiene rubber, a styrene maleic anhydride copolymer, a syndiotactic polystyrene, an ethylene acrylic acid copolymer, a polytrifluorochloroethylene resin, a polyvinylidene fluoride resin, an ethylene-tetrafluoroethylene copolymer, an ethylene-chlorotrifluoroethylene copolymer, a polyvinyl fluoride resin, a polystyrene acrylonitrile resin, a polyorganosiloxane resin, a furfural phenol resin, a furfural acetone resin, a furfuryl alcohol resin, a phenolic resin, an epoxy resin, or an unsaturated polyester resin.

The tackifying resin is a type of special adhesive resins that can increase adhesion performance. When the tackifying resin is added to the adhesive member 30, viscosity and adhesion of the adhesive member 30 can be improved. The tackifying resin can improve fluidity, adhesion, and shear resistance performance of the adhesive member 30 to stably adhere the jelly roll 20 to the packaging bag 10. The tackifying resin includes one or more of a rosin resin, a terpene resin, a petroleum resin, a phenolic resin, or an epoxy resin.

The curing agent is a type of chemical substances used to promote curing or hardening of the adhesive member 30. The curing agent chemically reacts with main ingredients of the adhesive resin and/or the tackifying resin, thereby converting the adhesive agent from a liquid or semi-solid state to a solid state, to enhance adhesion performance and durability. For example, when the adhesive member 30 uses the hot melt adhesive, adding the curing agent to the hot melt adhesive can solidify and harden the hot melt adhesive faster and improve adhesion strength. The curing agent includes one or more of epoxidized m-phenylenediamine, a 4,4'-diaminodiphenylmethane epoxy resin, p-Aminophenol triglycidyl ether, hexamethylene diisocyanate, or methylene diphenyl diisocyanate, and the chemical substances can react chemically with molecules of a substrate in the hot-melt adhesive to form a cross-linking structure, so as to cause the molecules of the hot-melt adhesive to be staggered with each other, and increase firmness and stability of the adhesion. In addition, adding the curing agent can also improve fluidity of the hot melt adhesive, making it easier to coat the hot melt adhesive.

A molecular weight of the above adhesive resin can be selected from 10,000 to 10,000,000. A ratio of the adhesive resin, the tackifying resin, and the curing agent is (50% to 90%):(10% to 50%):(0.1% to 5%).

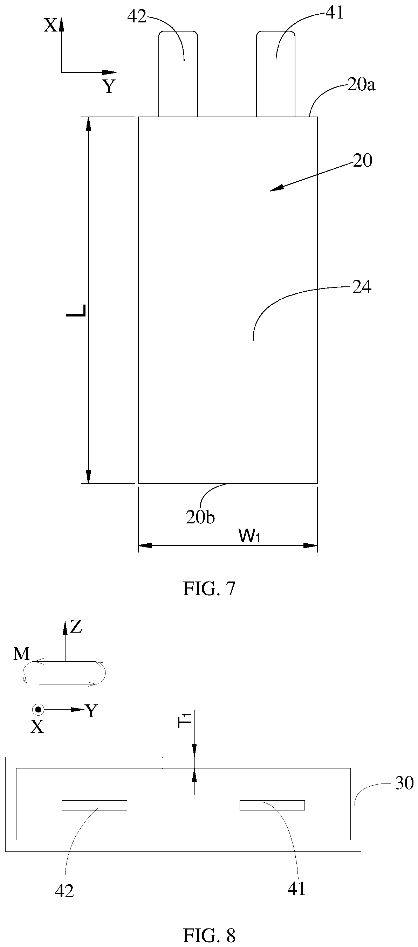

In embodiments of this application, the secondary battery 100 may be a long and narrow battery. For example, referring to FIG. 5 and FIG. 7, a length of the jelly roll 20 is L mm (not including the first tab 41 and the second tab 42) along the first direction X, and a width of the jelly roll 20 is $W_1$ mm along a second direction Y, where $2 \leq L / W_1 \leq 6$, so that the secondary battery is suitable for electronic products such as smart watches, smart glasses, and Bluetooth headsets. The second direction Y is a width direction of the jelly roll 20, and the second direction Y is perpendicular to the first direction X. The adhesive members 30 are arranged on and adhered to the secondary battery 100 in a sleeving manner, so that adhesion of the electrode plates and the separator 23 of the jelly roll 20 can be stable, and the gas generated by the jelly roll 20 can be reduced, which can alleviate the expansion of the jelly roll 20, thereby reducing the breakage of the packaging bag 10. This solution is especially suitable for a narrow and long secondary battery 100. For example, $50 \leq L \leq 200$, and $20 < W_1 \leq 100$; and preferably, $50 \leq L \leq 150$, and $25 \leq W_1 \leq 100$.

Referring to FIG. 1 and FIG. 5, there are a plurality of the adhesive members 30, the plurality of the adhesive members 30 are provided on the outer surface of the jelly roll 20 in a sleeving manner, and the plurality of the adhesive members 30 are provided at intervals along the first direction X. Arrangement of the plurality of the adhesive members 30 can disperse stress on the jelly roll 20. For example, stress on both sides along the width direction of the jelly roll 20 is dispersed to the plurality of the adhesive members 30, which can reduce a local stress impact, alleviate the expansion of the jelly roll 20, and reduce the breakage of the packaging bag 10. Optionally, the plurality of the adhesive members 30 are distributed along the first direction X at equal intervals on the outer surface of the jelly roll 20, to evenly disperse the stress on the jelly roll 20.

In some embodiments, a quantity of the adhesive member 30 is N, $N \geq [X]$, and $X = (L/W_1) + 1$. For example, $L/W_1 = 3$, so $N \geq [X] = 4$. That is, when a length-to-width ratio of the jelly roll 20 is 3, at least four of the adhesive members 30 can be adopted. For example, the four of the adhesive members 30 are all provided on the jelly roll 20 in a sleeving manner, and the four of the adhesive members 30 are sequentially provided at intervals along the first direction X. Alternatively, $L / W_1 = 3.5$, so $X = 4.5$, $[X] = 5$, and $N \geq 5$. In this case, at least five of the adhesive members 30 may be used to adhere to the jelly roll 20, so as to ensure that the adhesive members 30 are stably arranged on the jelly roll 20 in a sleeving manner. The quantity of the adhesive member 30 is limited based on the length-to-width ratio of the jelly roll 20, and $N \geq [X]$, to ensure effective stress dispersion. A larger value of the length-to-width ratio of the jelly roll 20 indicates more of the adhesive members 30 required for adhesion, so as to disperse stress on parts of the adhesive members 30, and reduce stress concentration.

Referring to FIG. 4 and FIG. 7, in some embodiments, the jelly roll 20 has a first outer surface 24 arranged along the winding direction M, and an area of the first outer surface 24 is $S_1$ mm$^2$. A coverage area of a single adhesive member 30 on the first outer surface 24 is $S_2$ mm$^2$, and $10\% \leq S_2 / S_1 <\_ 20\%$. The single adhesive member 30 has a sufficient adhesive area with the first outer surface 24, which can reduce stress concentration, and reduce tightening damage to the jelly roll 20, and the adhesive member can be stably arranged in a sleeving manner and adhered. A coverage area of all the adhesive members 30 on the first outer surface 24 is $S_3$ mm$^2$, and $40\% \leq S_3 / S_1 <\_ 80\%$, which can reduce tightening damage of the adhesive members 30 to the jelly roll 20. In addition, the adhesive members 30 also adhere to the packaging bag 10. In the above adhesion area, when the jelly roll 20 and the packaging bag 10 have a relative movement tendency or have relative movement, tearing of the adhesive members 30 can be reduced, to enhance bonding strength between the jelly roll 20 and the packaging bag 10.

Because the adhesive member 30 is arranged on the first outer surface 24 of the jelly roll 20 in a sleeving manner, and a circumference of the adhesive member 30 is substantially consistent with a circumference of the first outer surface 24 along the winding direction M, the coverage area of the adhesive member 30 on the first outer surface 24 is related to a width of the adhesive member 30 along the first direction X. In the embodiments of this application, the width of the adhesive member 30 along the first direction X is $W_2$ mm, where $2 \leq W_2 <\_ 20$, which can reduce stress concentration and reduce tightening damage to the jelly roll 20. Optionally, referring to FIG. 8, along a third direction Z, a thickness of the adhesive member 30 is $T_1$ $\mu$m, and $5 <\_ T_1 \leq 80$, which can ensure bonding strength of the adhesive member 30, reduce a space occupied by the adhesive member 30, and ensure energy density of the secondary battery 100. The third direction Z is perpendicular to the first direction X, and the third direction Z is perpendicular to the winding direction M of the jelly roll 20. Because the winding direction M is actually formed by a combination of countless directions, and the winding direction M is perpendicular to and corresponds to the third direction Z, the third direction Z also includes countless directions (only one third direction Z is shown in FIG. 8), and the third direction Z may be considered as a direction from the adhesive member to the jelly roll 20.

Optionally, referring to FIG. 5, the first outer surface 24 of the jelly roll 20 has a plurality of uncovered regions 241. The uncovered regions 241 refer to regions of the outer surface of the jelly roll 20 that are not covered by the adhesive members 30. A quantity of the uncovered regions 241 is M, and M = N - 1. In this case, adhesive members 30 are arranged on both locations of the first outer surface 24 that are close to the first end portion 20a and the second end portion 20b in a sleeving manner. Both the first end portion 20a and the second end portion 20b are at edge locations of the jelly roll 20, and bonding strength that is between the electrode plates and the separator 23 and that is near the two end portions is weak. The adhesive members 30 are arranged on both the locations close to the first end portion 20a and the second end portion 20b in a sleeving manner, which can further improve the bonding strength of the jelly roll 20 and effectively disperse the stress.

In the embodiments of this application, the adhesive member 30 encircles the jelly roll 20 and are arranged on the outer surface of the jelly roll 20 in a sleeving manner, so as to tighten the electrode plates and the separator 23 at the layers of the jelly roll 20, so that the adhesion of the layers of the jelly roll 20 is stable and the gas generated by the jelly roll 20 can be reduced, which can effectively alleviate the expansion of the jelly roll 20, and thus reduce the breakage of the packaging bag 10. In addition, the adhesive members 30 can disperse stress of the jelly roll 20, reduce the local stress impact, alleviate the expansion of the jelly roll 20, and reduce the breakage of the packaging bag 10. Moreover, the jelly roll 20 and the packaging bag 10 are adhered via the adhesive member 30, which can reduce movement of the jelly roll 20 in the packaging bag 10, thereby reducing the impact of the jelly roll 20 on the packaging bag 10, further reducing the breakage of the packaging bag 10, and improving high temperature resistance performance of the secondary battery 100.

In the embodiments of this application, a lithium-ion battery is used as an example, and a high-temperature test is performed on the lithium-ion battery.

Preparing a lithium-ion battery

Embodiment 1

(1) Preparation of a negative electrode plate:

Using graphite as a negative active material, mixing the negative active material graphite, a binder styrene-butadiene rubber (SBR), and a thickening agent sodium carboxymethyl cellulose (CMC) in a weight ratio of 96:2:2, and adding deionized water as a solvent, to prepare a slurry with a solid content of 70 wt% and stir evenly. Evenly coating the slurry on one surface of a copper foil with a thickness of 10 $\mu$m, and drying to obtain a negative electrode plate coated with a negative active layer on one surface. Repeating the above steps on the other surface of the copper foil, to obtain a negative electrode plate coated with negative active layers on both surfaces.

(2) Preparation of a positive electrode plate:

Mixing a positive active material lithium cobalt oxide (LiCoO$_2$), conductive carbon black (Super P), and polyvinylidene difluoride (PVDF) in a weight ratio of 97.5:1.0:1.5, and adding N-methyl-pyrrolidone (NMP) as a solvent, to prepare a slurry with a solid content of 75 wt% and stir evenly. Evenly coating the slurry on one surface of an aluminum foil with a thickness of 12 $\mu$m, and drying to obtain a positive electrode plate coated with a positive active layer on one surface. Repeating the above steps on the other surface of the aluminum foil, to obtain a positive electrode plate coated with positive active layers on both surfaces.

(3) Preparation of an electrolyte solution:

In the atmosphere of dry argon gas, first mixing ethylene carbonate (EC), ethyl methyl carbonate (EMC), and diethyl carbonate (DEC) in a mass ratio of EC:EMC:DEC = 30:50:20 to obtain a basic organic solvent, and then adding lithium salts lithium hexafluorophosphate (LiPF$_6$) to the basic organic solvent to dissolve and mix evenly to obtain an electrolyte solution in which a mass concentration of LiPF$_6$ is 12.5%.

(4) Preparation of a separator:

Using a polyethylene porous film as a substrate layer, and coating a ceramic layer containing alumina ceramics and a PVDF binder on one side surface of the substrate layer as a separator, where a mass percentage of the alumina ceramics in the ceramic layer is 95%.

(5) Preparation of an adhesive member:

Mixing a polypropylene resin (an adhesive resin), an epoxy resin (a tackifying resin), and m-Phenylenebis(diglycidylaminomethane) (a curing agent) in a ratio of 70%:25%:5% to prepare an adhesive member with hot melt adhesive.

(6) Preparation of a jelly roll:

Stacking and winding the above-mentioned positive electrode plate, separator, and negative electrode plate. Using a 12 mm $\times$ 1 mm nickel sheet and aluminum sheet as tabs. Welding the aluminum-sheet tab to the positive electrode plate (aluminum foil of the positive electrode plate), and welding the nickel-sheet tab to the negative electrode plate (copper foil of the negative electrode plate), to form a jelly roll.

(7) Jelly roll assembly: Arranging and adhering the above-mentioned adhesive members to an outer surface of a jelly roll in a sleeving manner, where near two ends along a length direction of the jelly roll, the adhesive members 30 sleeve the jell roll . Placing, in a modular fixture, an aluminum-plastic film molded through pouch forming, with a pouch surface facing upward, and placing the jelly roll in a pouch. Applying an external force for compaction, so that the adhesive member 30 and the aluminum-plastic film are preliminarily adhered. Covering the jelly roll with another aluminum-plastic film molded through pouch forming, with a pouch surface facing downward, and performing hot sealing on surroundings of the two aluminum-plastic films by hot pressing, to obtain the assembled jelly roll. A length L of the jelly roll = 50 mm, and a width $W_1$ = 25 mm; and L / $W_1$ = 2. A quantity of the adhesive members is 3, the three adhesive members are arranged in a sleeving manner at equal intervals in the length direction of the jelly roll, and a width of the adhesive member in the length direction of the jelly roll is 10 mm.

(8) Liquid injection and packaging: Injecting an electrolyte solution into the assembled jelly roll, performing vacuum packaging, standing, and hot-pressing formation, to make adhesive members be stably adhered between the jelly roll and a packaging bag, and performing shaping and other processes to prepare a lithium-ion battery.

Embodiment 2

Different from the embodiment 1, a length L of a jelly roll = 100 mm, and a width $W_1$ = 25 mm; and L / $W_1$ = 4.

Embodiment 3

Different from the embodiment 1, a length L of a jelly roll = 150 mm, and a width $W_1$ = 25 mm; and L / $W_1$ = 6.

Embodiment 4

Different from the embodiment 1, a length L of a jelly roll = 100 mm, and a width $W_1$ = 35 mm; and L / $W_1$ = 2.87.

Embodiment 5

Different from the embodiment 1, a length L of a jelly roll = 200 mm, and a width $W_1$ = 35 mm; and L / $W_1$ = 5.71.

Embodiment 6

Different from the embodiment 1, a length L of a jelly roll = 100 mm, and a width $W_1$ = 50 mm; and L/$W_1$ = 2.

Embodiment 7

Different from the embodiment 1, a length L of a jelly roll = 200 mm, and a width $W_1$ = 50 mm; and L / $W_1$ = 4.

Embodiment 8

Different from the embodiment 1, a length L of a jelly roll = 200 mm, and a width $W_1$ = 100 mm; and L / $W_1$ = 2.

Comparative Embodiment 1

Different from the embodiment 1, no adhesive member is provided.

Comparative Embodiment 2

Different from the embodiment 1, a length L of a jelly roll = 200 mm, and a width $W_1$ = 25 mm; and L / $W_1$ = 8.

Comparative Embodiment 3

Different from the embodiment 1, a length L of a jelly roll = 200 mm, and a width $W_1$ = 150 mm; and L / $W_1$ = 1.33.

Test method

1). A lithium-ion battery stands at 25 °C for 5 minutes.
2). Charge the lithium-ion battery at 0.5C DC (Direct Current) to 3.0V.
3). The lithium-ion battery stands for another 5 minutes.
4). Convert the lithium-ion battery at 0.5C CC (Constant Current) 4.5V CV (Constant Voltage) to 0.05C.
5). After the lithium-ion battery stands for 5 minutes, transfer the lithium-ion battery to a heating furnace, raise a temperature at 5 °C/min to 100 degC, and keep the temperature constant for 5 h.
6). Turn off the heating, cool naturally to a room temperature, and check whether the lithium-ion battery has breakage and liquid leakage.

Test results are shown in Table 1 below.

Table 1

|  | L (mm) | $W_1$ (mm) | L/ $W_1$ | With adhesive members or not | Breakage and liquid leakage |
|---|---|---|---|---|---|
| Embodiment 1 | 50 | 25 | 2 | Yes | 0/10 |
| Embodiment 2 | 100 | 25 | 4 | Yes | 0/10 |
| Embodiment 3 | 150 | 25 | 6 | Yes | 0/10 |
| Embodiment 4 | 100 | 35 | 2.87 | Yes | 0/10 |
| Embodiment 5 | 200 | 35 | 5.71 | Yes | 0/10 |
| Embodiment 6 | 100 | 50 | 2 | Yes | 0/10 |
| Embodiment 7 | 200 | 50 | 4 | Yes | 0/10 |
| Embodiment 8 | 200 | 100 | 2 | Yes | 0/10 |

(continued)

|  | L (mm) | W₁ (mm) | L/W₁ | With adhesive members or not | Breakage and liquid leakage |
|---|---|---|---|---|---|
| Comparative Embodiment 1 | 50 | 25 | 2 | None | 10/10 |
| Comparative Embodiment 2 | 200 | 25 | 8 | Yes | 7/10 |
| Comparative Embodiment 3 | 200 | 150 | 1.33 | Yes | 6/10 |

According to the above Table 1, with reference to Embodiments 1 to 8 and Comparative embodiment 1, it can be learned that when the adhesive members are arranged on the outer surface of the jelly roll in a sleeving manner, the breakage and liquid leakage of the lithium-ion battery can be effectively reduced. In Comparative embodiment 2, the length-to-width ratio $L/W_1$ of the jelly roll is large, more adhesive members are needed for adhesion, and a manufacturing process is increased, which is not conducive to improving production efficiency of the lithium-ion battery. In addition, because the length-to-width ratio of the jelly roll is large, a bonding force between layers of the jelly roll is weakened, and the jelly roll is more prone to expand, which may lead to breakage of a side seal edge of the packaging bag. In Comparative embodiment 3, the length-to-width ratio $L/W_1$ of the jelly roll is small, and stress concentration may also occur on a top end of the jelly roll (along an extension direction of a tab). The adhesive members can limit expansion of side edges (both sides along a width direction of the jelly roll) of the jelly roll, but cannot limit the top end of the jelly roll, which may cause breakage of top sealing of the packaging bag. With reference to Embodiments 1 to 8 and Comparative embodiments 2 and 3, when $2 \leq L/W_1 \leq 6$, the breakage and liquid leakage of the packaging bag can be effectively reduced. In addition, with reference to Embodiments 1 to 8, optionally, $50 < L \leq 200$, and $20 \leq W_1 \leq 100$; and preferably, $50 \leq L \leq 150$, and $25 \leq W_1 \leq 100$. In this range, the breakage and liquid leakage of the packaging bag are effectively reduced.

In the embodiments of this application, the lithium-ion battery is used as an example, and the high-temperature test is performed on the lithium-ion battery again.

Embodiment 9

Different from Embodiment 1, a quantity of adhesive members is 1.

Embodiment 10

Different from Embodiment 1, a quantity of adhesive members is 2.

Embodiment 11

Different from Embodiment 1, a quantity of adhesive members is 4.

Embodiment 12

Different from Embodiment 1, a quantity of adhesive members is 5.

Embodiment 13

Different from Embodiment 1, adhesive members are not arranged on locations close to two ends along a length direction of a jelly roll in a sleeving manner.

Embodiment 14

Different from Embodiment 1, a width $W_2$ of an adhesive member = 5 mm, a quantity of adhesive members is 1, and one adhesive member is adhered in a middle location of a jelly roll along a length direction of the jelly roll.

Embodiment 15

Different from Embodiment 1, a width $W_2$ of an adhesive member = 5 mm, and a quantity of adhesive members is 2.

Embodiment 16

Different from Embodiment 1, a width $W_2$ of an adhesive member = 5 mm, and a quantity of adhesive members is 3.

Embodiment 17

Different from Embodiment 1, a width $W_2$ of an adhesive member = 5 mm, a quantity of adhesive members is 3, and adhesive members are not arranged on locations close to two ends along a length direction of a jelly roll in a sleeving manner.

Embodiment 18

Different from Embodiment 1, a width $W_2$ of an adhesive member = 5 mm, and a quantity of adhesive members is 4.

Embodiment 19

Different from Embodiment 1, a width $W_2$ of an adhesive member = 5 mm, and a quantity of adhesive members is 5.

Embodiment 20

Different from Embodiment 1, a width $W_2$ of an adhesive member = 5 mm, and a quantity of adhesive members is 6.

Test results are shown in Table 2 below.

Table 2

|  | L(mm) | $W_1$(mm) | $W_2$(mm) | N | M | Breakage and liquid leakage |
|---|---|---|---|---|---|---|
| Embodimen t 1 | 50 | 25 | 10 | 3 | 2 | 0/10 |
| Embodimen t 9 | 50 | 25 | 10 | 1 | 2 | 1/10 |
| Embodimen t 10 | 50 | 25 | 10 | 2 | 1 | 1/10 |
| Embodimen t 11 | 50 | 25 | 10 | 4 | 3 | 1/10 |
| Embodimen t 12 | 50 | 25 | 10 | 5 | 0 | 1/10 |
| Embodimen t 13 | 50 | 25 | 10 | 3 | 4 | 2/10 |
| Embodimen t 14 | 50 | 25 | 5 | 1 | 2 | 1/10 |
| Embodimen t 15 | 50 | 25 | 5 | 2 | 1 | 1/10 |
| Embodimen t 16 | 50 | 25 | 5 | 3 | 2 | 0/10 |
| Embodimen t 17 | 50 | 25 | 5 | 3 | 4 | 3/10 |
| Embodimen t 18 | 50 | 25 | 5 | 4 | 3 | 1/10 |
| Embodimen t 19 | 50 | 25 | 5 | 5 | 4 | 1/10 |
| Embodimen t 20 | 50 | 25 | 5 | 6 | 5 | 1/10 |

According to the above Table 2, with reference to Embodiment 9, Embodiment 18, and the above Embodiment 1, it can be learned that when the adhesive members are not arranged on the locations close to the two ends along the length direction of the jelly roll in a sleeving manner, slight breakage and liquid leakage occur. This is because the stress concentration occurs at the two ends along the length direction of the jelly roll, and a separator shrinks, the jelly roll expands and generates gas, resulting in the breakage and the liquid leakage of the packaging bag. Therefore, in the embodiments of this application, preferably, the adhesive members are arranged on the locations close to the two ends along the length direction of the jelly roll in a sleeving manner, that is, a quantity M of uncovered regions = N - 1.

Embodiments 1, 11, 12, 16, and 18 to 20 all satisfy that $N \geq \lceil X \rceil$ and X = (L / $W_1$) + 1, and effect of reducing the breakage and the liquid leakage is obvious in these parts of embodiments. Compared with Embodiments 1, 11, 12, 16, and 18 to 20, none of Embodiments 9, 10, 14, and 15 satisfy that $N \geq \lceil X \rceil$ and X = (L/ W$_1$) + 1, and effect of reducing the breakage and the liquid leakage is weak. Therefore, in this application, $N \geq \lceil X \rceil$, and X = (L/ W$_1$) + 1; and preferably, $N = \lceil X \rceil$, which can reduce the quantity of adhesive members, to reduce costs and improve energy density of a secondary battery.

In the embodiments of this application, a lithium-ion battery is used as an example, and a high-temperature test is performed on the lithium-ion battery.

Embodiment 21

Different from Embodiment 1, a quantity of adhesive members is 1, and one adhesive member is adhered in a middle location of a jelly roll along a length direction of the jelly roll.

Embodiment 22

Different from Embodiment 1, a quantity of adhesive members is 2.

Embodiment 23

Different from Embodiment 1, a quantity of adhesive members is 4.

Embodiment 24

Different from Embodiment 1, a quantity of adhesive members is 5.

Embodiment 25

Different from Embodiment 1, a width W$_2$ of an adhesive member = 5 mm, a quantity of adhesive members is 1, and one adhesive member is adhered in a middle location of a jelly roll along a length direction of the jelly roll.

Embodiment 26

Different from Embodiment 1, a width W$_2$ of an adhesive member = 5 mm, and a quantity of adhesive members is 3.

Embodiment 27

Different from Embodiment 1, a width W$_2$ of an adhesive member = 5 mm, and a quantity of adhesive members is 5.

Embodiment 28

Different from Embodiment 1, a width W$_2$ of an adhesive member = 5 mm, and a quantity of adhesive members is 8.

Embodiment 29

Different from Embodiment 1, a width W$_2$ of an adhesive member = 5 mm, and a quantity of adhesive members is 10.

Embodiment 30

Different from Embodiment 1, a width W$_2$ of an adhesive member = 15 mm, and a quantity of adhesive members is 1.

Embodiment 31

Different from Embodiment 1, a width $W_2$ of an adhesive member = 15 mm, and a quantity of adhesive members is 2.

Embodiment 32

Different from Embodiment 1, a width $W_2$ of an adhesive member = 15 mm, and a quantity of adhesive members is 3.

Embodiment 33

Different from Embodiment 1, a width $W_2$ of an adhesive member = 2.5 mm, and a quantity of adhesive members is 10.

Test results are shown in Table 3 below.

Table 3

| | L(mm) | $W_2$(mm) | N | $S_2/S_1$ | $S_3/S_1$ | Breakage and liquid leakage |
|---|---|---|---|---|---|---|
| Embodiment 1 | 50 | 10 | 3 | 20% | 60% | 0/10 |
| Embodiment 21 | 50 | 10 | 1 | 20% | 20% | 1/10 |
| Embodiment 22 | 50 | 10 | 2 | 20% | 40% | 0/10 |
| Embodiment 23 | 50 | 10 | 4 | 20% | 80% | 0/10 |
| Embodiment 24 | 50 | 10 | 5 | 20% | 100% | 2/10 |
| Embodiment 25 | 50 | 5 | 1 | 10% | 10% | 2/10 |
| Embodiment 26 | 50 | 5 | 3 | 10% | 30% | 0/10 |
| Embodiment 27 | 50 | 5 | 5 | 10% | 50% | 0/10 |
| Embodiment 28 | 50 | 5 | 8 | 10% | 80% | 0/10 |
| Embodiment 29 | 50 | 5 | 10 | 10% | 100% | 1/10 |
| Embodiment 30 | 50 | 15 | 1 | 30% | 30% | 2/10 |
| Embodiment 31 | 50 | 15 | 2 | 30% | 60% | 1/10 |
| Embodiment 32 | 50 | 15 | 3 | 30% | 90% | 1/10 |
| Embodiment 33 | 50 | 2.5 | 10 | 5% | 50% | 2/10 |

In Embodiment 33, a width of a single adhesive member is small. When such adhesive members are arranged on an outer surface of a jelly roll in a sleeving manner, stress dispersion by the adhesive members is not obvious, which may cause tightening cracks on the outer surface of the jelly roll and may cause local expansion of the jelly roll, resulting in the breakage and the liquid leakage of the packaging bag. In Embodiment 24 and Embodiment 29, an outer surface of a jelly roll in a winding direction is completely covered, which not only affects energy density, but also is difficult for an electrolyte solution to penetrate the jelly roll, and cyclic lithium plating is prone to occur. With reference to the above Embodiments 21 to 33, it can be learned that when $10\% \leq S_2/S_1 \leq 20\%$, and $40\% \leq S_3/S_1 \leq 80\%$, the breakage and the liquid leakage of the packaging bag can be effectively reduced.

According to a second aspect, an embodiment of this application further provides an electronic device, including the secondary battery 100 in any embodiment of the first aspect. The electronic device in this embodiment of this application is not particularly limited, and can be any electronic device known in the prior art. For example, the electronic device includes, but is not limited to, Bluetooth headsets, a mobile phone, a tablet, a laptop, an electric toy, an electric tool, or the like.

Finally, it is hereby noted that the foregoing embodiments are merely intended to illustrate technical solutions of this application rather than to limit this application; under the thought of this application, technical features in the foregoing embodiments or different embodiments may also be combined, steps may be implemented in any orders, and there are many other changes in different aspects of this application as described above, which are not provided in detail for the sake of brevity; although this application is illustrated in detail with reference to the foregoing embodiments, a person of ordinary skill in the art understands that he may still make modifications to the technical solutions recited in the foregoing embodiments or make equivalent replacements to some of the technical features; however, these modifications or replacements do not make the essence of the corresponding technical solution depart from the scope of the technical solutions of the embodiments.

**Claims**

1. A secondary battery (100), comprising a packaging bag (10a) and a jelly roll (20) accommodated in the packaging bag (10a), **characterized in that**,

   along a first direction (X), a length of the jelly roll (20) is L mm;
   along a second direction (Y), a width of the jelly roll (20) is $W_1$ mm;

$$2 \leq L / W_1 \leq 6;$$

   ;
   the secondary battery (100) further comprises at least one adhesive member (30), the at least one adhesive member (30) is provided on an outer surface of the jelly roll (20) in a sleeving manner along a winding direction (M) of the jelly roll (20);
   the at least one adhesive member (30) is adhered between the jelly roll (20) and the packaging bag (10a); and
   the first direction (X) is a winding axis direction of the jelly roll (20), the second direction (Y) is a width direction of the jelly roll (20), the first direction (X) is perpendicular to the second direction (Y).

2. The secondary battery (100) according to claim 1, **characterized in that**, $50 < L \leq 200$, and $20 < W_1 \leq 100$.

3. The secondary battery (100) according to claim 2, **characterized in that**, $50 \leq L \leq 150$, and $25 \leq W_1 \leq 100$.

4. The secondary battery (100) according to any one of claims 1 to 3, **characterized in that**,

   the at least one adhesive member includes a plurality of adhesive members (30);
   the plurality of adhesive members (30) are all provided on the outer surface of the jelly roll (20) in a sleeving manner; and
   the plurality of adhesive members (30) are provided at intervals along the first direction (X).

5. The secondary battery (100) according to claim 4, **characterized in that**,

   the jelly roll (20) has a first outer surface (24) provided along the winding direction (M) of the jelly roll (20); and
   along the first direction (X), the plurality of adhesive members (30) are provided at two ends of the first outer surface (24) in a sleeving manner.

6. The secondary battery (100) according to claim 5, **characterized in that**,

   a quantity of adhesive members in the plurality of adhesive members (30) is N, X = (L/$W_1$) + 1, $N \geq \lceil X \rceil$;
   the first outer surface (24) further has a plurality of uncovered regions (241), wherein the plurality of uncovered regions are not covered with the plurality of adhesive members (30); and
   a quantity of the uncovered regions in the plurality of uncovered regions (241) is M, M = N - 1.

7. The secondary battery (100) according to claim 4, **characterized in that**,

   the jelly roll (20) has a first outer surface (24) provided along the winding direction (M);
   an area of the first outer surface (24) is $S_1$ mm$^2$;
   a coverage area of each adhesive member (30) on the first outer surface (24) is $S_2$ mm$^2$, $10\% \leq S_2/ S_1 \leq 20\%$; and
   a coverage area of all of the plurality of adhesive members (30) on the first outer surface (24) is $S_3$ mm$^2$, $40\% \leq S_3/S_1 \leq 80\%$.

8. The secondary battery (100) according to any one of claims 1 to 7, **characterized in that**,

   along the first direction (X), a width of each adhesive member (30) is $W_2$ mm, $2 \leq W_2 \leq 20$;
   along a third direction (Z), a thickness of each adhesive member (30) is $T_1$ μm, $5 \leq T_1 \leq 80$; and
   the third direction (Z) is perpendicular to the winding direction (M) of the jelly roll (20), the third direction (Z) is perpendicular to the first direction (X).

9. The secondary battery (100) according to any one of claims 1 to 8, **characterized in that**, each adhesive member (30) comprises a hot melt adhesive or a pressure-sensitive adhesive.

10. The secondary battery (100) according to any one of claims 1 to 8, **characterized in that**,

   each adhesive member (30) comprises a substrate layer (31);
   two opposite surfaces of the substrate layer (31) along a thickness direction of the substrate layer (31) are respectively provided with a first adhesive layer (32) and a second adhesive layer (33);
   the first adhesive layer (32) is adhered to the jelly roll (20);
   the second adhesive layer (33) is adhered to the packaging bag (10a);
   the first adhesive layer (32) comprises a pressure-sensitive adhesive; and
   the second adhesive layer (33) comprises a hot melt adhesive or the pressure-sensitive adhesive.

11. An electronic device, **characterized in that**, the electronic device comprises the secondary battery (100) according to any one of claims 1 to 10.

100

FIG. 1

100

10a

20b

20

Y          X

30

20a

10b

42

12

41    40

FIG. 2

100

FIG. 3

20

FIG. 4

FIG. 5

FIG. 6

FIG. 7

FIG. 8

Europäisches Patentamt

European Patent Office

Office européen des brevets

# EUROPEAN SEARCH REPORT

**Application Number**

EP 24 20 1741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/084899 A1 (DENG GUOYOU [CN] ET AL) 23 March 2017 (2017-03-23) | 1,8-11 | INV. H01M10/04 |
| A | * paragraphs [0002], [0027], [0034]; claim 2; figure 4 * | 4-7 | H01M10/0587 H01M50/105 |
| Y | US 2015/171383 A1 (AHN JEONGCHULL [KR] ET AL) 18 June 2015 (2015-06-18) | 1-3,8-11 | |
| A | * paragraphs [0003], [0007], [0008], [0013], [0024], [0038], [0074] - [0077]; figures 1, 2 * | 4-7 | |
| Y | CN 217 903 250 U (SONGSHAN LAKE MAT LAB) 25 November 2022 (2022-11-25) | 1-3,8-11 | |
| A | * see attached machine translation; pages 1, 7; figures 2, 4 * | 4-7 | |
| Y | US 2012/115025 A1 (KIM SUNG-JONG [KR] ET AL) 10 May 2012 (2012-05-10) | 10 | |
| A | * paragraphs [0008], [0009], [0039] - [0041], [0063], [0070]; figures 4, 5, 6 * | 4-7 | **TECHNICAL FIELDS SEARCHED (IPC)** |
| | | | H01M |

The present search report has been drawn up for all claims

| Place of search | Date of completion of the search | Examiner |
|---|---|---|
| Munich | 5 February 2025 | Dunn, Halina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1741

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | Publication date | Patent family member(s) | Publication date |
|---|---|---|---|
| US 2017084899 A1 | 23-03-2017 | CN 104795527 A | 22-07-2015 |
| | | US 2017084899 A1 | 23-03-2017 |
| US 2015171383 A1 | 18-06-2015 | CN 104710946 A | 17-06-2015 |
| | | EP 2884557 A1 | 17-06-2015 |
| | | JP 7060316 B2 | 26-04-2022 |
| | | JP 2015118921 A | 25-06-2015 |
| | | KR 20150069837 A | 24-06-2015 |
| | | US 2015171383 A1 | 18-06-2015 |
| CN 217903250 U | 25-11-2022 | NONE | |
| US 2012115025 A1 | 10-05-2012 | CN 102549801 A | 04-07-2012 |
| | | EP 2477252 A1 | 18-07-2012 |
| | | JP 5579863 B2 | 27-08-2014 |
| | | JP 6063418 B2 | 18-01-2017 |
| | | JP 2012529753 A | 22-11-2012 |
| | | JP 2015008140 A | 15-01-2015 |
| | | KR 20120035090 A | 13-04-2012 |
| | | TW 201226511 A | 01-07-2012 |
| | | TW 201446935 A | 16-12-2014 |
| | | US 2012115025 A1 | 10-05-2012 |
| | | US 2015147640 A1 | 28-05-2015 |
| | | WO 2012046911 A1 | 12-04-2012 |

EPO FORM P0459

For more details about this annex : see Official Journal of the European Patent Office, No. 12/82